# EUROPEAN PATENT SPECIFICATION

(11) **EP 3 876 250 B1**
(45) Date of publication and mention of the grant of the patent: **04.06.2025**
(21) Application number: 20161015.1
(22) Date of filing: 04.03.2020
(51) Int. Cl.: H01G 2/02, H01G 2/06, H01G 2/14, H01G 4/228, H01G 4/38, H01G 4/40

(54) **MULTILAYER CAPACITOR ASSEMBLY**
VIELSCHICHTKONDENSATORANORDNUNG
ASSEMBLAGE DE CONDENSATEUR MULTICOUCHE

(43) Date of publication of application: 08.09.2021
(73) Proprietor: Valeo Comfort and Driving Assistance, 94000 Créteil (FR)
(72) Inventor: NANDYALA, Chakrapani, 94046 Créteil CEDEX (FR)
(74) Representative: Delaval, Guillaume Laurent

(56) References cited:
- US-A- 5 583 738
- US-A1- 2006 120 016
- US-A1- 2007 211 414
- US-A1- 2008 174 932
- US-B1- 6 515 842

## Description

### TECHNICAL FIELD OF THE INVENTION

The invention relates to the technical field of electricity and electronics. More precisely the invention relates to a capacitor assembly.

### BACKGROUND INFORMATION AND PRIOR ART

Capacitors are currently used in electric circuits, for instance to filter out noise on signal and power lines. Many other applications are of course possible, including decoupling integrated circuits (sink) from their power supply (source). In this case, capacitors act as a local source of charge, making a (temporary) decoupling from the main source (power supply) possible. In this application, a big capacitance is required to hold more charge.

In some applications however, the use of a plurality of capacitors is required (often in parallel arrangement), for instance when it is sought to form a filter having a broad frequency range (e.g. to filter noise in this broad frequency range).

However, using several capacitors generally result in bulky electric circuits and generate unwanted resonances due to high equivalent series resistance and inductance. Prior art is disclosed in documents US6515842B1, US2006120016A1, US2008174932A1, US5583738A or US2007211414A1.

### SUMMARY OF THE INVENTION

In this context, the invention provides a capacitor assembly according to claim 1 comprising:
- a set of terminals comprising at least a first terminal, a second terminal and a third terminal;
- a conductive structure comprising a first conductive plate and a second conductive plate, the first conductive plate and the second conductive plate being electrically connected to the first terminal;
- a third conductive plate electrically connected to the second terminal and facing the first conductive plate at a first distance, thereby forming a first gap filled with a first dielectric material; and
- a fourth conductive plate electrically connected to the third terminal and facing the second conductive plate at a second distance, thereby forming a second gap filled with a second dielectric material,
wherein the first distance is different from the second distance.

Thus, a capacitor having a first capacitance value is obtained between the first terminal and the second terminal, and another capacitor having a second capacitance value, different from the first capacitance value, is obtained between the first terminal and the third terminal.

In addition, as the same conductive structure (called *"main conductive structure"* in the following description) is used to form both capacitors, the capacitor assembly is compact and provides low equivalent series resistance and inductance. Since this conductive structure forms a primary plate for the various capacitors of the capacitor assembly, it results in a very low equivalent series inductance value when mounted, and thus in broad band characteristics.

According to possible optional features:
- the conductive structure is a first conductive structure comprising a first plurality of parallel conductive plates including said first conductive plate;
- the capacitor assembly comprises a second conductive structure forming a second plurality of parallel conductive plates including the third conductive plate;
- the first plurality of parallel conductive plates is interleaved with the second plurality of parallel conductive plates, thereby defining a first plurality of gaps each having a thickness equal to said first distance;
- the capacitor assembly comprises a third conductive structure forming a third plurality of parallel conductive plates including the fourth conductive plate;
- the first conductive structure comprises a fourth plurality of parallel conductive plates including said second conductive plate;
- the fourth plurality of parallel conductive plates is interleaved with the third plurality of parallel conductive plates, thereby defining a second plurality of gaps each having a thickness equal to said second distance;
- the set of terminals comprises a fourth terminal;
- the conductive structure comprises a fifth conductive plate electrically connected to the first terminal;
- a sixth conductive plate is electrically connected to the fourth terminal and faces the fifth conductive plate at a third distance, thereby forming a gap;
- the third distance is different from the first distance and different from the second distance;
- the first conductive plate and/or the second conductive plate (and/or the fifth conductive plate) are conductively connected to the first terminal within the capacitor assembly;
- the third conductive plate is conductively connected to the second terminal within the capacitor assembly;
- the fourth conductive plate is conductively connected to the third terminal within the capacitor assembly;
- the fifth conductive plate is conductively connected to the fourth terminal within the capacitor assembly;
- the first dielectric material is identical to the second dielectric material;
- a resistive element is interposed between the third conductive plate and the second terminal.

Other features and advantages of the embodiments of the present invention will be better understood upon reading of preferred embodiments thereof with reference to the appended drawings.

### BRIEF DESCRIPTION OF THE DRAWINGS

Figure 1 shows a capacitor assembly according to a possible embodiment of the invention;
Figure 2 is an exploded view of the capacitor assembly of Figure 1;
Figure 3 is an electric diagram representing the capacitor assembly of Figure 1;
Figure 4 are schematics showing a possible use of the capacitor assembly of Figure 1;
Figure 5 shows a main conductive structure of a capacitor assembly according to another possible embodiment of the invention;
Figure 6 shows secondary conductive structures of this capacitor assembly; and
Figure 7 is another electric diagram representing another embodiment of a capacitor assembly according to the invention.

### DETAILED DESCRIPTION OF EXAMPLE(S)

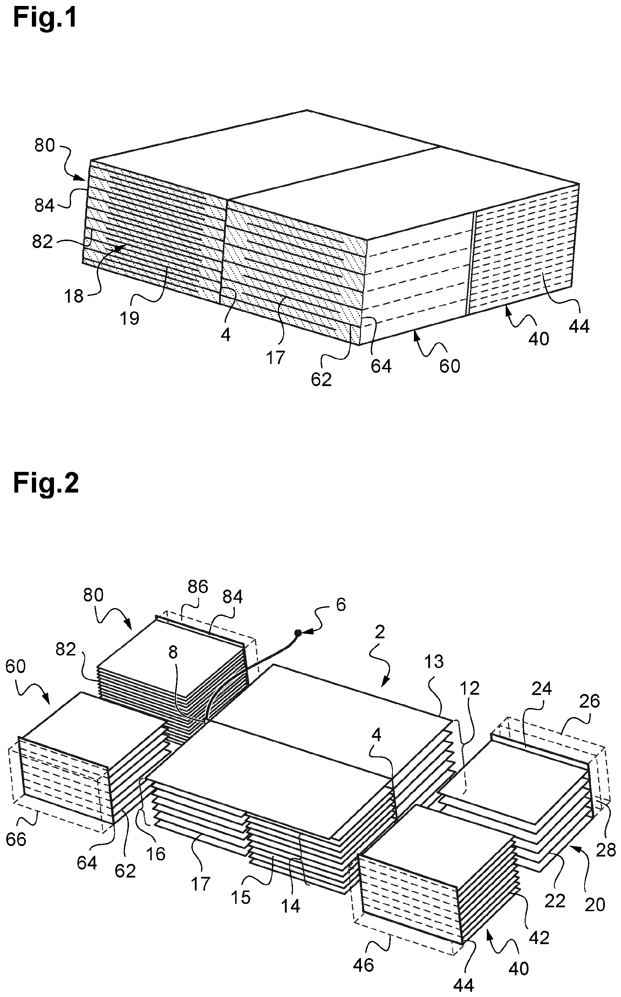

An exemplary embodiment of a capacitor assembly according to the invention as set forth in the appended claims is now described referring in particular to Figures 1 & 2.

In the present description, *"conductive"* should be understood as *"electrically conductive".*

As clearly visible in Figure 2, this capacitor assembly comprises a main conductive structure 2 and a plurality of (here: four) secondary conductive structures 20, 40, 60, 80.

Each conductive structure 2, 20, 40, 60, 80 is made of one or several conductive material(s), as further described below.

The main conductive structure 2 comprises a wall 4 (made of conductive material) from which several sets 12, 14, 16, 18 of parallel conductive plates 13; 15; 17; 19 extend.

Precisely, each such set 12; 14; 16; 18 comprises a plurality of parallel conductive plates 13; 15; 17; 19 extending parallel to one another and perpendicular to the wall 4. As visible in Figure 2, each conductive plate 13; 15; 17; 19 of these sets 12; 14; 16; 18 is affixed to the wall 4 along an edge of the concerned conductive plate 13, 15, 17; 19. In the present embodiment, each conductive plate 13; 15; 17; 19 of the main conductive structure 2 is thus in electrical contact with *(i.e.* electrically connected to) the wall 4.

In the present case, some conductive plates 13, 19 (here conductive plates 13, 19 of sets 12, 18) extend from a first side of the wall 4, while other conductive plates 15, 17 (here conductive plates 15, 17 of sets 14, 16) extend from a second side of the wall 4 (opposite the first side of the wall 4).

According to a possible embodiment, the main conductive structure 2 is entirely made of copper. According to another possible embodiment, the wall 4 is made of copper and the conductive plates 13; 15; 17; 19 of the main conductive structure 2 are made of nickel.

Neighbouring (parallel) conductive plates 13; 15; 17; 19 within a given set 12; 14; 16; 18 are separated by the same distance, but this distance varies from one set to another set, as further explained below.

The main conductive structure 2 is electrically connected to a terminal 6. For instance, an edge portion 8 of the wall 4 (protruding here from two sets of parallel conductive plates) is electrically connected to the terminal 6.

The conductive plates 13; 15; 17; 19 of the various sets 12, 14, 16, 18 are thus in electrical connection with the terminal 6. Said differently, conductive plates 13; 15; 17; 19 of the various sets 12, 14, 16, 18 are thus conductively connected (within the capacitor assembly) to the terminal 6.

Each secondary conductive structure 20; 40; 60; 80 comprises a wall 24; 44; 64; 84 (made of conductive material) and a set of parallel conductive plates 22; 42; 62; 82 extending from this wall 24; 44; 64; 84.

Precisely, each such set comprises a plurality of conductive plates 22; 42; 62; 82 parallel to one another and perpendicular to the wall 24; 44; 64; 84. Conductive plates 22; 42; 62; 82 of a secondary conductive structure 20; 40; 60; 80 are affixed to the wall 24; 44; 64; 84 of this secondary conductive structure 20; 40; 60 and therefore electrically connected to this wall 24; 44; 64; 84.

Within a secondary conductive structure 20; 40; 60; 80, the wall 24; 44; 64; 84 and the conductive plates 22; 42; 62; 82 may be made of the same conductive material, such as copper. However, according to possible embodiments, several conductive materials may be used. For instance, the wall 24; 44; 64; 84 may be made of copper, while the conductive plates 22; 42; 62; 82 may be made of nickel.

In each secondary conductive structure 20; 40; 60; 80, the neighbouring (parallel) conductive plates 22; 42; 62; 82 are separated by the same distance, which is thus characteristic of the concerned secondary conductive structure 20; 40; 60; 80. The distance between conductive plates 22; 42; 62; 82 however varies from one secondary conductive structure to another secondary conductive structure, as further explained below.

Each secondary conductive structure 20; 40; 60; 80 is electrically connected to a corresponding terminal 26; 46; 66; 86.

In the embodiment shown in Figure 2, the terminals 26, 46, 66, 86 are formed by respective conductive blocks (shown in dotted lines) in direct or indirect electrical contact with the wall 24; 44; 64; 84 of the concerned secondary conductive structure 20; 40; 60; 80.

Such conductive blocks 26; 46; 66; 86 are made of a conductive material, for instance copper.

According to a possible implementation (as shown in Figure 2 for terminals 46, 66, 86), the terminals (or conductive blocks) 46; 66; 86 may be in physical contact with the corresponding wall 44; 64; 84 and thus enable (direct) electrical connection between the concerned secondary conductive structure 40; 60; 80 and the corresponding terminal 46; 66; 86 (and as a consequence between conductive plates 42; 62; 82 of each secondary conductive structure 40; 60; 80 and the corresponding terminal 46; 66; 86).

According to another possible implementation (as shown in Figure 2 for terminal 26), a resistive element 28 (such as a resistive block, e.g. made using carbon powder) is interposed between the secondary conductive structure 20 and the corresponding terminal 26. In the embodiment shown in Figure 2, the resistive element 28 is arranged in physical contact with the wall 24 of the secondary conductive structure 20 (on one side of the resistive element 28) and with the terminal 26 (on the other side of the resistive element 28).

The secondary conductive structure 20 and thus the conductive plates 22 included in this secondary conductive structure 20 are in this case electrically connected to the terminal 26 via the resistive element 28.

Conductive plates 22; 42; 62; 82 in each secondary conductive structure 20; 40; 60; 80 is thus conductively connected (within the capacitor assembly) to the corresponding terminal 26; 46; 66; 86 within the capacitor assembly.

Each set 12; 14; 16; 18 of conductive plates 13; 15; 17; 19 of the main conductive structure 2 interacts with a particular secondary conductive structure 20; 40; 60; 80, as now explained.

As visible in Figure 1 for the secondary conductive structures 60; 80, conductive plates 22; 42; 62; 82 of a given secondary conductive structure 20; 40; 60; 80 are interleaved with conductive plates of a corresponding set 12; 14; 16; 18 of the main conductive structure 2 (conductive plates 22; 42; 62; 82 of the concerned secondary conductive structure 20; 40; 60; 80 being parallel to conductive plates of the corresponding set 12; 14; 16; 18 of the main conductive structure 2).

Thus, each conductive plate 22; 42; 62; 82 of a secondary conductive structure 20; 40; 60; 80 faces a conductive plate 13; 15; 17; 19 of the corresponding set 12; 14; 16; 18 of the main conductive structure 2, thereby defining a gap therebetween, which gap is filled with dielectric material.

Although other solutions may be contemplated, a conductive plate 22; 42; 62; 82 of a secondary conductive structure 20; 40; 60; 80 is generally positioned in practice halfway between two conductive plates 13; 15; 17; 19 of the corresponding set 12; 14; 16; 18 of the main conductive structure 2 (except possibly for conductive plates 22; 42; 62; 82 situated at an end of the concerned series of conductive plates).

Correspondingly, a conductive plate 13; 15; 17; 19 of a set 12; 14; 16; 18 of the main conductive structure 2 is generally positioned in practice halfway between two conductive plates 22; 42; 62; 82 of the corresponding secondary conductive structure 20; 40; 60; 80 (except possibly for conductive plates 13; 15; 17; 19 situated at an end of the concerned series of conductive plates).

Thanks to the above construction, conductive plates 13; 15; 17; 19 of sets 12; 14; 16; 18 of the main conductive structure 20; 40; 60; 80 and conductive plates 22; 42; 62; 82 of secondary conductive structures 20; 40; 60; 80 form gaps (filled with dielectric material) having a thickness which varies depending on the concerned set 12; 14; 16; 18 and secondary conductive structure 20; 40; 60; 80.

In the example of Figures 1 & 2, conductive plates 22 of the secondary conductive structure 20 face conductive plates 13 of a first set 12 (or plurality) of conductive plates of the main conductive structure 2 at a fist distance *(i.e.* conductive plates 22 and conductive plates 13 are parallel to one another and interleaved, and neighbouring conductive plates 13, 22 are separated by the first distance).

Gaps formed between conductive plates 22 and conductive plates 13 thus have a thickness equal to the first distance and are filled with a first dielectric material.

Conductive plates 42 of the secondary conductive structure 40 face conductive plates 15 of a second set 14 (or plurality) of conductive plates of the main conductive structure 2 at a second distance (*i.e*. conductive plates 42 and conductive plates 15 are parallel to one another and interleaved, and neighbouring conductive plates 15, 42 are separated by the second distance).

Gaps formed between conductive plates 42 and conductive plates 15 thus have a thickness equal to the second distance and are filled with a second dielectric material.

Conductive plates 62 of the secondary conductive structure 60 face conductive plates 17 of a third set 16 (or plurality) of conductive plates of the main conductive structure 2 at a third distance (*i.e.* conductive plates 62 and conductive plates 17 are parallel to one another and interleaved, and neighbouring conductive plates 17, 62 are separated by the third distance).

Gaps formed between conductive plates 62 and conductive plates 17 thus have a thickness equal to the third distance and are filled with a third dielectric material.

Conductive plates 82 of the secondary conductive structure 80 face conductive plates 19 of a fourth set 18 (or plurality) of conductive plates of the main conductive structure 2 at a fourth distance (*i.e.* conductive plates 82 and conductive plates 19 are parallel to one another and interleaved, and neighbouring conductive plates 19, 82 are separated by the fourth distance).

Gaps formed between conductive plates 82 and conductive plates 19 thus have a thickness equal to the fourth distance and are filled with a fourth dielectric material.

In the present example, the same dielectric material is used for filling all the gaps formed between the main conductive structure 2 and each secondary conductive structure 20; 40; 60; 80. However, in other embodiments, distinct dielectric materials may be used for the gaps formed respectively by the various secondary conductive structures 20; 40; 60; 80.

The interaction between each secondary conductive structure 20; 40; 60; 80 and the corresponding set 12; 14; 16; 18; 20 of conductive plates 13; 15; 17; 19 of the main conductive structure 2 produces a capacitor having a capacitance value C1; C2; C3; C4.

In order to obtain several values C1, C2, C3, C4 of capacitance with the capacitor assembly, gap thicknesses differ depending on the concerned secondary conductive structure - set pair.

Thus, in the example of Figures 1 & 2; the first distance, the second distance, the third distance and the fourth distance are not identical.

For instance, at least the first distance is different from the second distance (the difference between the first distance and the second distance being *e.g.* larger than 10% of the first distance). The third distance is here also different from the first distance, and different from the second distance (the difference between the third distance and the first distance, and/or the difference between the third distance and the second distance being *e.g*. larger than 10% of the third distance).

Specifically, in the present embodiment, the first distance, the second distance, the third distance and the fourth distance are different two by two (the difference between any two distances among the first, second, third and fourth distances being *e.g*. larger than 10% of the smallest distance among the first, second, third and fourth distances).

Said differently, the thickness of gaps formed by interaction of a secondary conductive structure with the main conductive structure is different from the thickness of gaps formed by interaction of another secondary conductive structure with the main conductive structure.

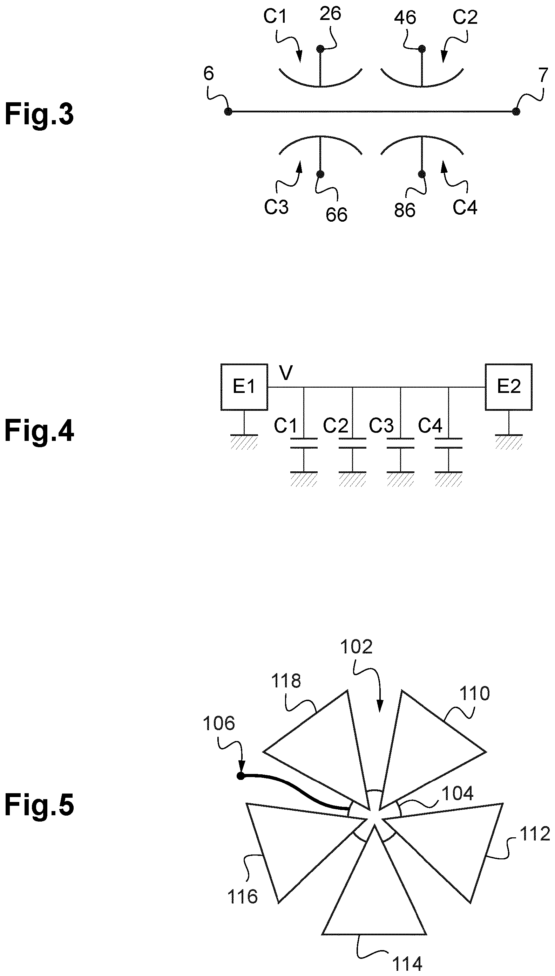

Thus, as shown by the electric diagram of Figure 3, the capacitor assembly described above provides several capacitors with distinct respective capacitance values C1, C2, C3, C4. (Figure 3 represents the case where no resistive element 28 is used.)

Precisely, a first capacitance value C1 is obtained between terminal 6 and terminal 26, a second capacitance value C2 is obtained between terminal 6 and terminal 46, a third capacitance value C3 is obtained between terminal 6 and terminal 66, and a fourth capacitance value C4 is obtained between terminal 6 and terminal 26.

As the first distance and the second distance are different, the first capacitance value C1 and the second capacitance value C2 are different.

Furthermore, in the present embodiment, as the first distance, the second distance, the third distance and the fourth distance are different two by two, the first capacitance value C1, the second capacitance value C2, the third capacitance value C3 and the fourth capacitance value C4 are also different two by two.

In addition, the capacitance values may also differ from one another due to the use of distinct dielectric materials, as noted above.

As shown in Figure 3, another terminal 7 may be provided in electrical connection with the main conductive structure 2 (terminal 7 being for instance connected to an opposite end of wall 4 compared to the connecting point of terminal 6 to the wall 4).

Figure 4 shows a possible application of the capacitor assembly described above.

In this application, the capacitor assembly is used to damp noise by filtering a voltage signal V carried by a conductive line between a first electronic circuit E1 and a second electronic circuit E2.

In this goal, terminal 6 of the capacitor assembly is connected to a pin of the first electronic circuit E1 and terminal 7 of the capacitor assembly is connected to a pin of the second electronic circuit E2.

In this application, all terminals 26, 46, 66, 86 (electrically connected to the secondary conductive structures 20; 40; 60; 80 within the capacitor assembly) are connected to a ground potential (whereto the first electronic circuit E1 and the second electronic circuit E2 are also connected).

This construction makes it possible to filter out noise in a wide range of frequencies, obtained by the concatenation of several frequency ranges respectively corresponding to the various capacitance values C1, C2, C3, C4. The capacitor assembly may thus be used instead of a plurality of capacitors.

This construction is thus particularly compact, which enables in addition to reduce equivalent series resistance (ESR) and equivalent series inductance (ESL).

The invention is not limited to the embodiments described above. In particular, the capacitor assembly may use only 2 or 3 secondary conductive structures (and corresponding sets of conductive plates in the main conductive structure), or more than 4 secondary conductive structures (and corresponding sets of conductive plates in the main conductive structure).

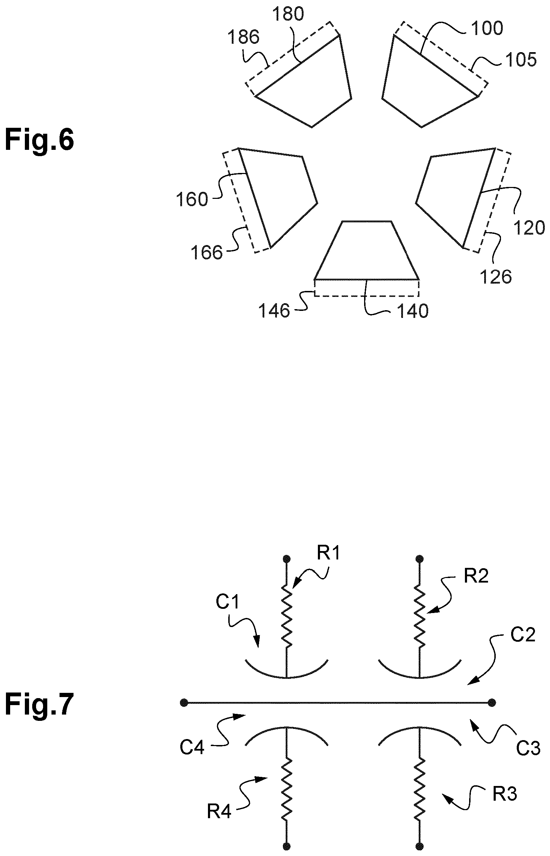

Similarly, the secondary conductive structures may be arranged in a different manner (with respect to the main conductive structure, for instance). In a possible embodiment, the various secondary conductive structures may be arranged in circular fashion around the centre of the main conductive structure, for instance in a star arrangement as shown in Figures 5 and 6.

Precisely, in the embodiment shown in Figures 5 and 6, the main conductive structure 102 includes a plurality of sets 110, 112, 114, 116, 118 of (here triangular) conductive plates, these sets 110, 112, 114, 116, 118 being arranged around a central connection portion 104.

The central connection portion 104 is here in physical contact with (and thus conductively connected to) each of the sets of conductive plates 110, 112, 114, 116, 118. The central connection portion 104 is also connected to a first terminal 106 of the capacitor assembly.

As shown in Figure 6, corresponding secondary conductive structures 100, 120, 140, 160, 180 are provided, each conductive structure 100; 120; 140; 160; 180 being connected to a terminal 105; 126; 146; 166; 186.

Each secondary conductive structure 100; 120; 140; 160; 180 includes a plurality of conductive plates (having here a trapezoidal shape in order to cooperate with the triangular conductive plates of the main conductive structure 102).

As in the embodiment of Figures 1 & 2, conductive plates of a given secondary conductive structure 100; 120; 140; 160; 180 are interleaved with conductive plates of a corresponding set 110; 112; 114; 116; 118 of the main conductive structure 102.

The distance between conductive plates is variable from one set of the main conductive structure to another set of the main conductive structure, and, in a similar fashion, from one secondary conductive structure to another secondary conductive structure.

Thus, different gap thicknesses (and hence different capacitances) are obtained for the various secondary conductive structure - set pairs.

In another possible embodiment, a resistive element (such as resistive element 28 visible in Figure 2) is interposed between each terminal and each corresponding secondary conductive structure. This makes it possible to obtain a conductive assembly having characteristics as shown by the schematics of Figure 7, where a resistor R1; R2; R3; R4 (corresponding to one of these resistive elements) is associated in series with each capacitor C1; C2; C3; C4.

## Claims

1. Capacitor assembly comprising:
- a set of terminals comprising at least a first terminal (6; 106), a second terminal (26; 105) and a third terminal (46; 126);
- a conductive structure (2; 102) comprising a first conductive plate (13) and a second conductive plate (15), the first conductive plate (13) and the second conductive plate (15) being electrically connected to the first terminal (6; 106);
- a third conductive plate (22) electrically connected to the second terminal (26; 105) and facing the first conductive plate (13) at a first distance, thereby forming a first gap filled with a first dielectric material; and
- a fourth conductive plate (42) electrically connected to the third terminal (46; 126) and facing the second conductive plate (15) at a second distance, thereby forming a second gap filled with a second dielectric material,
wherein the first distance is different from the second distance.

2. Capacitor assembly according to claim 1, wherein the conductive structure is a first conductive structure (2; 102) comprising a first plurality (12; 110) of parallel conductive plates including said first conductive plate (13).

3. Capacitor assembly according to claim 2, comprising a second conductive structure (20; 100) forming a second plurality of parallel conductive plates including the third conductive plate (22), wherein the first plurality (12; 110) of parallel conductive plates (13) is interleaved with the second plurality of parallel conductive plates (22), thereby defining a first plurality of gaps each having a thickness equal to said first distance.

4. Capacitor assembly according to claim 3, comprising a third conductive structure (40; 120) forming a third plurality of parallel conductive plates including the fourth conductive plate (42), wherein the first conductive structure (2; 102) comprises a fourth plurality (14; 112) of parallel conductive plates including said second conductive plate (15), and wherein the fourth plurality (14; 112) of parallel conductive plates (15) is interleaved with the third plurality of parallel conductive plates (42), thereby defining a second plurality of gaps each having a thickness equal to said second distance

5. Capacitor assembly according to any of claims 1 to 4, wherein the set of terminals comprises a fourth terminal (66; 146), wherein the conductive structure (2; 102) comprises a fifth conductive plate (17) electrically connected to the first terminal (6; 106) and wherein a sixth conductive plate (62) is electrically connected to the fourth terminal (66; 146) and faces the fifth conductive plate (17) at a third distance, thereby forming a gap, and wherein the third distance is different from the first distance and different from the second distance.

6. Capacitor assembly according to any of claims 1 to 5, wherein the first dielectric material is identical to the second dielectric material.

7. Capacitor assembly according to claims 1 to 6, wherein a resistive element (28) is interposed between the third conductive plate (22) and the second terminal (26).

## Patentansprüche

1. Kondensatoranordnung, die Folgendes umfasst:
- einen Satz von Anschlüssen, der mindestens einen ersten Anschluss (6; 106), einen zweiten Anschluss (26; 105) und einen dritten Anschluss (46; 126) umfasst;
- eine leitende Struktur (2; 102), die eine erste leitende Platte (13) und eine zweite leitende Platte (15) umfasst, wobei die erste leitende Platte (13) und die zweite leitende Platte (15) elektrisch mit dem ersten Anschluss (6; 106) verbunden sind;
- eine dritte leitende Platte (22), die elektrisch mit dem zweiten Anschluss (26; 105) verbunden und der ersten leitenden Platte (13) in einem ersten Abstand zugewandt ist, wodurch ein mit einem ersten Dielektrikum gefüllter erster Zwischenraum gebildet wird; und
- eine vierte leitende Platte (42), die elektrisch mit dem dritten Anschluss (46; 126) verbunden und der zweiten leitenden Platte (15) in einem zweiten Abstand zugewandt ist, wodurch ein mit einem zweiten Dielektrikum gefüllter zweiter Zwischenraum gebildet wird,
wobei sich der erste Abstand von dem zweiten Abstand unterscheidet.

2. Kondensatoranordnung nach Anspruch 1, wobei die leitende Struktur eine erste leitende Struktur (2; 102) ist, die eine erste Vielzahl (12; 110) paralleler leitender Platten, die die erste leitende Platte (13) enthält, umfasst.

3. Kondensatoranordnung nach Anspruch 2, die eine zweite leitende Struktur (20; 100) umfasst, die eine zweite Vielzahl paralleler leitenden Platten, die die dritte leitende Platte (22) enthält, bildet, wobei die erste Vielzahl (12; 110) paralleler leitender Platten (13) und die zweite Vielzahl paralleler leitender Platten (22) ineinandergeschachtelt sind, wodurch eine erste Vielzahl von Zwischenräumen definiert wird, die je eine Dicke, die gleich dem ersten Abstand ist, aufweisen.

4. Kondensatoranordnung nach Anspruch 3, die eine dritte leitende Struktur (40; 120) umfasst, die eine dritte Vielzahl paralleler leitender Platten, die die vierte leitende Platte (42) enthält, bildet, wobei die erste leitende Struktur (2; 102) eine vierte Vielzahl (14; 112) paralleler leitender Platten, die die zweite leitende Platte (15) enthält, umfasst und wobei die vierte Vielzahl (14; 112) paralleler leitender Platten (15) und die dritte Vielzahl paralleler leitender Platten (42) ineinandergeschachtelt sind, wodurch eine zweite Vielzahl von Zwischenräume definiert wird, die je eine Dicke, die gleich dem zweiten Abstand ist, aufweisen.

5. Kondensatoranordnung nach einem der Ansprüche 1 bis 4, wobei der Satz von Anschlüssen einen vierten Anschluss (66; 146) umfasst, wobei die leitende Struktur (2; 102) eine fünfte leitende Platte (17), die elektrisch mit dem ersten Anschluss (6; 106) verbunden ist, umfasst und wobei eine sechste leitende Platte (62) elektrisch mit dem vierten Anschluss (66; 146) verbunden und der fünften leitenden Platte (17) in einem dritten Abstand zugewandt ist, wodurch ein Zwischenraum gebildet wird, und wobei sich der dritte Abstand von dem ersten Abstand unterscheidet und sich von dem zweiten Abstand unterscheidet.

6. Kondensatoranordnung nach einem der Ansprüche 1 bis 5, wobei das erste Dielektrikum mit dem zweiten Dielektrikum identisch ist.

7. Kondensatoranordnung nach einem der Ansprüche 1 bis 6, wobei zwischen der dritten leitenden Platte (22) und dem zweiten Anschluss (26) ein Widerstandselement (28) eingefügt ist.

## Revendications

1. Ensemble condensateur comprenant :
- un ensemble de bornes comprenant au moins une première borne (6 ; 106), une deuxième borne (26 ; 105) et une troisième borne (46 ; 126) ;
- une structure conductrice (2 ; 102) comprenant une première plaque conductrice (13) et une deuxième plaque conductrice (15), la première plaque conductrice (13) et la deuxième plaque conductrice (15) étant connectées électriquement à la première borne (6 ; 106) ;
- une troisième plaque conductrice (22) connectée électriquement à la deuxième borne (26 ; 105) et faisant face à la première plaque conductrice (13) à une première distance, de manière à former un premier espace rempli d'un premier matériau diélectrique ; et
- une quatrième plaque conductrice (42) connectée électriquement à la troisième borne (46 ; 126) et faisant face à la deuxième plaque conductrice (15) à une deuxième distance, de manière à former un second espace rempli d'un second matériau diélectrique,
la première distance étant différente de la deuxième distance.

2. Ensemble condensateur selon la revendication 1, la structure conductrice étant une première structure conductrice (2 ; 102) comprenant une première pluralité (12 ; 110) de plaques conductrices parallèles comprenant ladite première plaque conductrice (13).

3. Ensemble condensateur selon la revendication 2, comprenant une deuxième structure conductrice (20 ; 100) formant une deuxième pluralité de plaques conductrices parallèles comprenant la troisième plaque conductrice (22), la première pluralité (12 ; 110) de plaques conductrices parallèles (13) étant entrelacée avec la deuxième pluralité de plaques conductrices parallèles (22), de manière à définir une première pluralité d'espaces ayant chacun une épaisseur égale à ladite première distance.

4. Ensemble condensateur selon la revendication 3, comprenant une troisième structure conductrice (40 ; 120) formant une troisième pluralité de plaques conductrices parallèles comprenant la quatrième plaque conductrice (42), la première structure conductrice (2 ; 102) comprenant une quatrième pluralité (14 ; 112) de plaques conductrices parallèles comprenant ladite deuxième plaque conductrice (15), et la quatrième pluralité (14 ; 112) de plaques conductrices parallèles (15) étant entrelacée avec la troisième pluralité de plaques conductrices parallèles (42), de manière à définir une seconde pluralité d'espaces ayant chacun une épaisseur égale à ladite deuxième distance.

5. Ensemble condensateur selon l'une quelconque des revendications 1 à 4, l'ensemble de bornes comprenant une quatrième borne (66 ; 146), la structure conductrice (2 ; 102) comprenant une cinquième plaque conductrice (17) connectée électriquement à la première borne (6 ; 106), et une sixième plaque conductrice (62) étant connectée électriquement à la quatrième borne (66 ; 146) et faisant face à la cinquième plaque conductrice (17) à une troisième distance, de manière à former un espace, et la troisième distance étant différente de la première distance et différente de la deuxième distance.

6. Ensemble condensateur selon l'une quelconque des revendications 1 à 5, le premier matériau diélectrique étant identique au second matériau diélectrique.

7. Ensemble condensateur selon les revendications 1 à 6, un élément résistif (28) étant interposé entre la troisième plaque conductrice (22) et la deuxième borne (26).
